# EUROPEAN PATENT APPLICATION

(11) **EP 2 799 967 A1**
(43) Date of publication of application: **05.11.2014**
(21) Application number: 12862158.8
(22) Date of filing: 08.10.2012
(51) Int. Cl.: G06F 3/048, G06F 3/041

(54) **TOUCH SCREEN UNLOCKING METHOD AND DEVICE**

(30) Priority: 28.12.2011 CN 201110447241
(71) Applicant: Huizhou TCL Mobile Communication Co., Ltd., Huizhou, Guangdong 516006 (CN)
(72) Inventor: DING, Yang, Huizhou Guangdong 516006 (CN)
(74) Representative: Brachmann, Roland W.
(86) International application number: PCT/CN2012/082593
(87) International publication number: WO 2013/097511

(57) **Abstract**

A touch screen unlocking method and device are disclosed. The method comprises the following steps: displaying a plurality of icons on an unlocking interface, wherein at least two of the icons can be arranged to match with each other; after a user has clicked one of the matched icons, amplifying and displaying the other icon; when the user clicks the amplified and displayed icon area, unlocking the touch screen. According to the present invention, the misoperation frequency by the user can be reduced, and the use experience of the user can be enhanced.

## Description

### Technical Field

The present invention relates to a touch screen method and device, and in particular, relates to a touch screen unlocking method and device.

### Background

Touch screen devices have become the mainstream electronic products in prior art, followed by a rich variety of unlocking methods, which are basically in a same way of slide-to-unlock, such as sliding from left to right or from right to left in a straight line, or drawing a multi-point connecting line, or lining out an icon from a designated area. All these methods, however, belong to the scope of slide-to-unlock.

Slide-to-unlock has its drawbacks due to the fact that in most cases a device cannot judge a sliding path correctly, for instance, it is hard to control the length of a sliding path or the force exerted on the sliding path. There is no a technical solution in prior art using two-point touches to unlock a screen; therefore, there is much room for the prior art to be improved and developed.

### Summary of the Invention

An object of the present invention is to provide a touch screen unlocking method and device, to provide an unlocking operation method not in a slide-to-unlock way, so as to achieve a more accurate unlocking operation, and reduce poor user experiences caused by misoperations.

A technical solution of the present invention is as below:
A touch screen unlocking method comprises the steps of as follows:
   A. displaying a plurality of icons on an unlocking interface, among which at least two icons are arranged to match with each other;
   B. waiting for a user to tap one of the matched icons;
   C. magnifying and displaying the other icon correspondingly after an operation of tapping one icon from the user is received, and waiting for a second tap operation from the user;
   D. unlocking the touch screen when the second tap operation in an area of the amplified and displayed icon from the user is received;
said step A further comprises the steps of:
- arranging for all icons to match in pairs;
- distributing said icons randomly on the unlocking interface.

In said method, in the step C the time of waiting for the second tap operation from the user is set as 10 seconds, 20 seconds or 30 seconds.

In said method, the icons in the step A are the ones predefined by a system, or customized by a user.

In said method, the step C further comprises the step of: highlighting the other icon matching with the icon.

In said method, the step C further comprises the step of: judging and magnifying the other icon in the list same as the tapped icon after one of the icons is tapped.

In said method, the step C further comprises the step of: reading information such as location, state from a configuration list in which the information such as a serial number of an icon, location of the icon, state of the icon and a serial number of the other icon matching with the icon is stored and displaying the icon on the screen by an unlocking program.

In said method, the step C further comprises the step of: finding out the icon from the configuration list, looking up the information of the other icon matching with the icon and magnifying the other icon by the unlocking program after one icon is tapped; using a whole magnified area as an area receiving an effective tap.

In said method, the step C further comprises the step of: when adding new icons onto a lock screen interface, adding two same icons at the same time onto the lock screen interface to match with each other, information of the added icons will be stored in the configuration list; when deleting icons, deleting two same icons together, and the deleted icons will be deleted from the configuration list, the added icons or the deleted icons comprise an icon and the other icon matching the icon.

In said method, the step C further comprises the step of: arranging some mostly used application icons onto the unlocking interface in advance, setting the matching icons for unlocking on the unlocking interface randomly, and starting a predefined function or application corresponding to the icons when the two tapped icons match with each other.

In said method, the step D further comprises the step of: performing unlocking and clearing the recorded user tapping records by a touch screen device.

A touch screen unlocking method comprises the steps of:
A. displaying a plurality of icons on an unlocking interface, among which at least two icons are arranged to match with each other;
B. waiting for a user to tap one of the matched icons;
C. magnifying and displaying the other icon correspondingly after an operation of tapping one icon from the user is received, and waiting for a second tap operation from the user;
D. unlocking the touch screen when the second tap operation in an area of the amplified and displayed icon from the user is received.

In said method, all icons in the step A are arranged to match in pairs.

In said method, said the icons in the step A are distributed randomly on the unlocking interface.

In said method, in the step C the time of waiting for the second tap operation from the user is set as 10 seconds, 20 seconds or 30 seconds.

In said method, the icons in the step A are the ones predefined by a system, or customized by a user.

A touch screen unlocking device using the method is arranged to include a configuration list storing the information comprising a serial number of an icon, location of the icon, state of the icon and a serial number of the other icon matching with the icon; an unlocking program used for, when one icon is tapped by the user, finding out the location and the state of the other icon matching with the icon from the configuration list and magnifying the other icon; a whole magnified area is used as an area receiving an effective tap.

In the touch screen unlocking device, an editing operation of adding unlocking icons onto a lock screen interface by the user is to add two same icons to the configuration list.

In the touch screen unlocking device, an edition operation of deleting unlocking icons on a lock screen interface by the user is to delete two same icons from the configuration list.

A touch screen unlocking method and device provided by the present invention can control the corresponding operation area and accurate operation movements, as well as reduce the misoperations to improve user experiences by employing the operation method of tapping two points on the touch screen actually, which is represented as matching two same icons to conduct unlocking formally.

### Brief Description of the Drawings

- Figure 1: is a schematic diagram of a preferred embodiment of a touch screen unlocking method and device according to the present invention.
- Figure 2: is a flow chart of a touch screen unlocking method according to the present invention.
- Figure 3: is a schematic diagram of another preferred embodiment of a touch screen unlocking method and device according to the present invention.

### Detailed Description of the Invention

The preferred embodiments of the present invention will be described in details below.

The unlocking method in a preferred embodiment of a touch screen unlocking method and device according to the present invention is similar to a simple game named "LinkGame", which achieves matching operation by tapping two points on a touch screen to conduct the judgment and operation of unlocking or not.

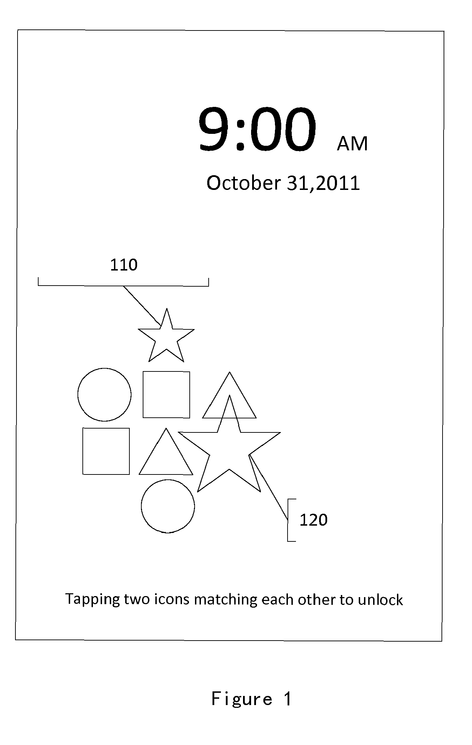

A touch screen unlocking method and device according to present invention, as shown in Figure 1, in the lock screen interface of a touch screen device waiting for being brightened by a tap, there are a plurality of icons displayed in a random area on the screen, among which each kind of icon has two same ones displayed in the area randomly, when one of the two same icons is tapped by a user, the other one will be treated specially such as magnified and displaced, and then the device can be unlocked after the magnified icon is tapped by the user, or a predefined function can be started directly. The plurality of icons is not limited to the display mode of random distribution but can be preset in fixed locations in advance.

A correlation match between two points on a touch screen can be achieved by clicking two icons in sequence, thus to perform unlocking. The other icon is magnified on the screen automatically after one icon is tapped, which can further facilitate the user's unlocking operation, thus improving user experiences.

During the implementation of a touch screen unlocking method and device according to the present invention, after a user taps one icon, he or she needs to find out the other icon matching with the tapped one from many icons displayed in a disrupted order and continue to tap it to achieve unlocking. It will take a longer time for the user to find out the other matching icon on the screen of a large screen device with too many icons, accordingly the time for unlocking the device increases, which may degrade the user experiences. However, while the user taps one icon, if the other icon matching with the icon is immediately magnified or displayed outstandingly in other ways such as but not limited to highlighting, it will be very easy for the user to find the other icon matching with the icon and tap it, thus reducing the time for the user to unlock the device.

The treating method for an icon to prompt a user strikingly can be various, which is not limited by a touch screen unlocking method and device of the present invention. As shown in Figure 1, there are totally four groups of the same icons, when a first selected icon 110 "five stars" is tapped by a user, the other same matching icon 120 will be magnified and displayed immediately by the operation program of the device to reduce the time spent in finding out the target icon by the user.

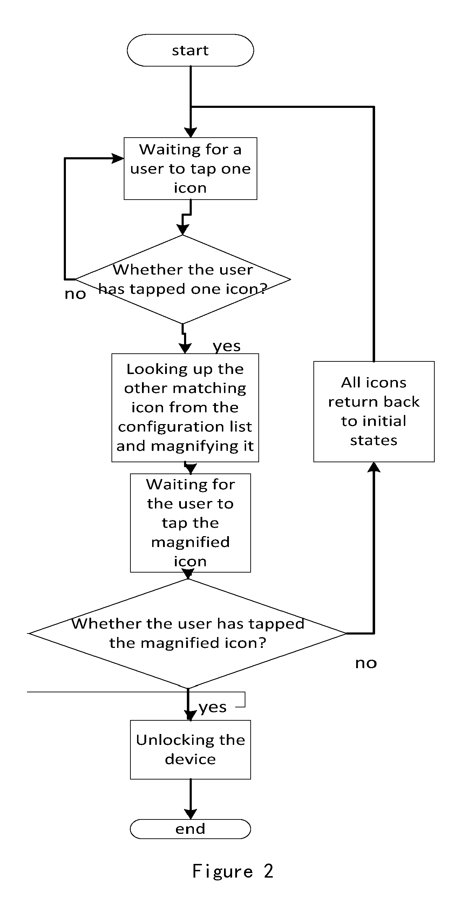

Certainly, the implementation form of unlocking icons is not limited by a touch screen unlocking method and device of the present invention as long as it can lead the user to tap two points on a screen in sequence. Figure 2 shows the processing flow of unlocking by tapping two points according to a method of the present invention, which comprises: after the beginning, providing multiple groups of icons on an unlocking interface, among which at least one group having two same icons is arranged; waiting for a user to tap one of the two same icons, certainly each of the icons can be set as having a same matching icon when setting the icons, so that the user can tap any of the icons; judging and magnifying the other same icon in the list after one of the two same icons is tapped by the user to prompt the user to note the magnified icon, and waiting for the user's further operation. If the user does not tap, after a preset time such as 10 second, 20 seconds or 30 seconds, the initial state of the unlocking interface is returned back and tapping a first selected icon by user is awaited again.

If the user performs a proper tap, unlocking the screen and clearing the recorded user tapping records are performed by the touch screen device to close the unlocking process.

The function icons on a lock screen interface can be icons predefined by a system, also can be icons customized by a user, which are not specifically limited by the present invention as long as the displayed icons can be identified by the user. In a preferred embodiment of the present invention, the displaying location of an icon is not limited specifically as long as the user can touch the icon successfully. And the overall displaying shape and sequence of all the function icons are not specifically limited either, the overall displaying shape can be in, for instance, a rectangle area or a circular area, and the displaying order can be in a random way or a predefined way.

In a touch screen unlocking device according to the present invention, the information such as a serial number of an icon, location of the icon, state of the icon as well as a serial number of the other icon matching with the icon is stored in a configuration list, an unlocking program reads the information such as location, state from the configuration list and displays the icon on the screen. When one icon is tapped by a user, the unlocking program finds out the icon from the icon configuration list, looks up the information such as location, state of the other icon matching with the icon, and magnifies the other icon matching with the icon; the whole magnified area can be used as an area receiving an effective tap.

In a preferred embodiment of the present invention, a user can perform an editing operation to the unlocking icons on a lock screen interface such as adding or deleting, when the user adds new icons to the lock screen interface, two same icons can be added at the same time to the lock screen interface to match each other, and similarly, the deleting operation can delete two same icons at the same time. The information of the added icons will be stored in the configuration list, the information of the deleted icons will be deleted from the configuration list, and the added icons or the deleted icons comprise an icon and the other icon matching with the icon. As the number of the new function icons added by the user, the present invention is not specifically limited.

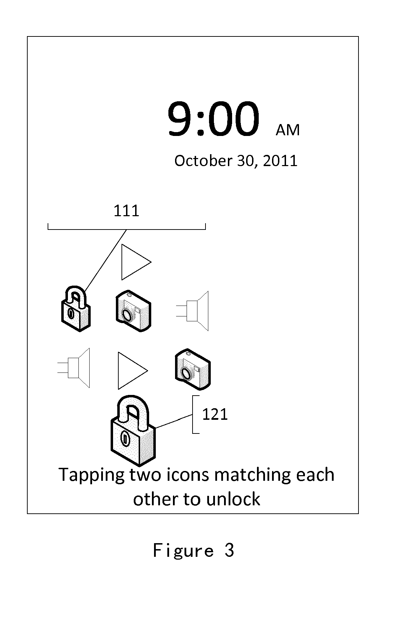

In an even more preferred embodiment, a touch screen unlocking method and device of the present invention shown in Figure 3, can extend the function of unlocking by tapping two points. Considering that a user needs to access a corresponding application interface immediately after the lock screen interface, some mostly used application icons can be preset on the unlocking interface as the quick start applications, the matching icons for unlocking can be set on the unlocking interface randomly, such as camera icon and music player icon shown in Figure 3, the user can select the application expected to use to correspond to first selected icon 111, and performs the second tap after the matching icon 121 is magnified and displayed; when the two icons tapped by the user match each other, the predefined function or application corresponding to the icon is started, by doing so the user can access the corresponding application interface directly and quickly. The function extension of tapping two points to unlock falls into the protection scope of the present invention too.

In conclusion, a touch screen unlocking method and device of the present invention facilitate a user's operation, increase the operation accuracy, and improve user experiences accordingly.

It should be understood that improvements or variations can be made according to the above description by those skilled in the art, and any of these improvements or variations shall fall into the protection scope of claims appended to the present invention.

## Claims

1. A touch screen unlocking method comprising the steps of as follows:
A. displaying a plurality of icons on an unlocking interface, among which at least two icons are arranged to match with each other;
B. waiting for a user to tap one of the matched icons;
C. magnifying and displaying the other icon correspondingly after an operation of tapping one icon from the user is received, and waiting for a second tap operation from the user;
D. unlocking the touch screen when the second tap operation in an area of the amplified and displayed icon from the user is received;
said step A further comprises the steps of:
- arranging for all icons to match in pairs;
- distributing said icons randomly on the unlocking interface.

2. The method according to claim 1, wherein, in the step C the time of waiting for the second tap operation from the user is set as 10 seconds, 20 seconds or 30 seconds.

3. The method according to claim 1, wherein, the icons in the step A are the ones predefined by a system, or customized by a user.

4. The method according to claim 1, wherein, the step C further comprises the step of:
- highlighting the other icon matching with the icon.

5. The method according to claim 1, wherein, the step C further comprises the step of:
- judging and magnifying the other icon in the list same as the tapped icon after one of the icons is tapped.

6. The method according to claim 5, wherein, the step C further comprises the step of:
- reading information such as location, state from a configuration list in which the information such as a serial number of an icon, location of the icon, state of the icon and a serial number of the other icon matching with the icon is stored and displaying the icon on the screen by an unlocking program.

7. The method according to claim 6, wherein, the step C further comprises the step of:
- finding out the icon from the configuration list, looking up the information of the other icon matching with the icon and magnifying the other icon by the unlocking program after one icon is tapped; using a whole magnified area as an area receiving an effective tap.

8. The method according to claim 7, wherein, the step C further comprises the step of:
- when adding new icons onto a lock screen interface, adding two same icons at the same time onto the lock screen interface to match with each other, information of the added icons will be stored in the configuration list; when deleting icons, deleting two same icons together, and the deleted icons will be deleted from the configuration list, the added icons or the deleted icons comprise an icon and the other icon matching the icon.

9. The method according to claim 8, wherein, the step C further comprises the step of:
- arranging some mostly used application icons onto the unlocking interface in advance, setting the matching icons for unlocking on the unlocking interface randomly, and starting a predefined function or application corresponding to the icons when the two tapped icons match with each other.

10. The method according to claim 1, wherein, the step D further comprises the step of:
- performing unlocking and clearing the recorded user tapping records by a touch screen device.

11. A touch screen unlocking method, which comprises the steps of:
A. displaying a plurality of icons on an unlocking interface, among which at least two icons are arranged to match with each other;
B. waiting for a user to tap one of the matched icons;
C. magnifying and displaying the other icon correspondingly after an operation of tapping one icon from the user is received, and waiting for a second tap operation from the user;
D. unlocking the touch screen when the second tap operation in an area of the amplified and displayed icon from the user is received.

12. The method according to claim 11, wherein all icons in the step A are arranged to match in pairs.

13. The method according to claim 11, **characterized in that** said the icons in the step A are distributed randomly on the unlocking interface.

14. The method according to claim 11, wherein, in the step C the time of waiting for the second tap operation from the user is set as 10 seconds, 20 seconds or 30 seconds.

15. The method according to claim 11, wherein, the icons in the step A are the ones predefined by a system, or customized by a user.

16. A touch screen unlocking device using the touch screen unlocking method according to claim 11, wherein, it comprises a configuration list storing the information comprising a serial number of an icon, location of the icon, state of the icon and a serial number of the other icon matching with the icon; an unlocking program used for, when one icon is tapped by the user, finding out the location and the state of the other icon matching with the icon from the configuration list and magnifying the other icon; a whole magnified area is used as an area receiving an effective tap.

17. The touch screen unlocking device according to claim 16, wherein, an editing operation of adding unlocking icons onto a lock screen interface by the user is to add two same icons to the configuration list.

18. The touch screen unlocking device according to claim 16, wherein, an edition operation of deleting unlocking icons on a lock screen interface by the user is to delete two same icons from the configuration list.
